(19) Europäisches Patentamt
European Patent Office
Office européen des brevets

(11) **EP 4 741 342 A1**

(12) **EUROPEAN PATENT APPLICATION**

(43) Date of publication:
13.05.2026 Bulletin 2026/20

(51) International Patent Classification (IPC):
*C01B 32/20* (2017.01)    *C01B 32/205* (2017.01)
*C01B 32/21* (2017.01)    *C04B 35/532* (2006.01)

(21) Application number: 25209395.0

(22) Date of filing: 17.10.2025

(52) Cooperative Patent Classification (CPC):
**C01B 32/21; C01B 32/20; C01B 32/205;
H01M 4/133; H01M 4/1393; H01M 4/587;
H01M 4/625; H01M 10/0525;** C01P 2002/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 07.11.2024 CN 202411585430

(71) Applicant: **AESC Japan Ltd.**
**Yokohama-shi, Kanagawa 220-0012 (JP)**

(72) Inventor: **HOU, Shuyan**
**Pudong New Area Shanghai, 201315 (CN)**

(74) Representative: **Becker, Eberhard**
**Becker Kurig & Partner**
**Patentanwälte mbB**
**Bavariastraße 7**
**80336 München (DE)**

(54) **GRAPHITE MATERIAL AND PREPARATION METHOD THEREOF, ELECTROCHEMICAL DEVICE AND ELECTRONIC APPARATUS**

(57)    Disclosed are a graphite material and a method for preparing the same, an electrochemical device and an electronic apparatus. The graphite material satisfies the following conditions: La≤72nm, Lc≤15nm; wherein, La is a lattice constant of a graphite crystal in a 110 plane in the graphite material, Lc is a lattice constant of the graphite crystal in a 002 plane in the graphite material; F≥15mN, F is a particle crushing force. The electrochemical device (especially lithium-ion battery) containing the same may ensure an excellent initial efficiency and fast-charging performance, while maintaining an excellent self-discharge performance, capacity performance and cycling performance.

EP 4 741 342 A1

**Description**

BACKGROUND

Technical Field

The present disclosure relates to a graphite material and a method for preparing the same, an electrochemical device, and an electronic apparatus.

Description of Related Art

Microcrystalline graphite is a type of natural graphite characterized by small unit cell and porous structure, which renders microcrystalline graphite greater kinetic advantages compared to conventional flake natural graphite, and higher capacity and compaction compared to conventional synthetic graphite. Furthermore, the raw material cost of microcrystalline graphite is significantly lower, approximately 20% to 30% of that of natural flake graphite of equivalent quality, thereby indicating promising application prospects. However, naturally mined microcrystalline graphite contains a high level of impurities, necessitating purification before being used as a negative electrode material in lithium-ion batteries. The purification treatment is complex, and the cost of impurity removal is approximately 2-3 times that of natural flake graphite of equivalent quality. Consequently, when considering the overall cost, microcrystalline graphite does not possess a cost advantage, significantly limiting the application potential thereof.

Existing impurity removal technologies, such as those described in Chinese Patent Application No. CN107555426A, utilize acid-base and high-temperature heat treatment methods to purify microcrystalline graphite. Although these methods claim to be energy-efficient, the processing of waste acids and alkalis, along with the requirement for crucible furnaces, inevitably results in a substantial increase in costs. Additionally, these methods may compromise the structure of the graphite material, thereby impairing the initial efficiency and fast-charging performance of lithium-ion batteries containing such graphite. Chinese Patent Application No. CN109616640A describes a technique involving the coating of microcrystalline graphite by adding inorganic salts in a nitrogen atmosphere to improve the cycling performance of microcrystalline graphite. However, the experimental process is not suitable for large-scale mass production, and the high cost of experimental materials is not conducive to reducing the final product cost. Although the cycling performance of lithium-ion batteries using this microcrystalline graphite shows improvement, there are difficulties in ensuring an excellent initial efficiency and fast-charging performance. Therefore, developing methods that enable lithium-ion batteries containing graphite materials to ensure superior initial efficiency and fast-charging capabilities is crucial.

SUMMARY

In order to solve the problem that existing lithium-ion batteries containing graphite materials cannot ensure an excellent initial efficiency and fast-charging performance, the present disclosure provides a graphite material and a method for preparing the same, an electrochemical device and an electronic apparatus. The graphite material has extremely small La and Lc, relatively large particle crushing force F, and the electrochemical device (especially lithium-ion battery) containing the same may ensure an excellent initial efficiency and fast-charging performance, while also maintaining an excellent self-discharge performance, capacity performance and cycling performance.

To achieve the above objectives, the present disclosure adopts the following technical solutions.

In a first aspect, the present disclosure provides a graphite material, which satisfies the following conditions:

> a. La≤72nm, Lc≤15nm; wherein La is a lattice constant of a graphite crystal in a 110 plane in the graphite material, and Lc is a lattice constant of the graphite crystal in a 002 plane in the graphite material;
> b. F≥15mN, wherein F is a particle crushing force.

In a second aspect, the present disclosure provides a method for preparing the graphite material as described above, which includes the following steps:

> S1, conducting a first mixing by mixing a graphite precursor and a binder, adding a solvent to conduct a second mixing to obtain a mixture; wherein a temperature of the first mixing is 5°C-20°C below a softening point of the binder;
> S2, pressing the mixture to obtain a graphite green body;
> S3, laying the graphite green body on a surface layer of graphitization equipment, laying a graphitization insulation material on the graphite green body, conducting a graphitization treatment, the graphite green body obtaining graphitized graphite green body through the graphitization treatment;
> S4, conducting a crushing treatment on the graphitized graphite green body to obtain the graphite material.

In a third aspect, the present disclosure provides an electrochemical device, which includes a negative electrode sheet, the negative electrode sheet including a negative electrode material layer and a negative electrode current collector, the negative electrode material layer including the graphite material as described above.

In a fourth aspect, the present disclosure provides an electronic apparatus, which includes the electrochemical device as described above.

The positive progressive effects of the present disclosure lie in:

The present disclosure provides a graphite material. Through control and design of parameters such as lattice constants La and Lc, a particle crushing force F, and so on, electrochemical devices (especially lithium-ion batteries) including the graphite material may ensure an excellent initial efficiency and fast-charging performance, while also maintaining an excellent self-discharge performance, capacity performance and cycling performance.

DESCRIPTION OF THE EMBODIMENTS

The present disclosure is further illustrated below by way of examples, but the present disclosure is not thereby limited to the scope of the described examples. For experimental methods in the following examples where specific conditions are not specified, conventional methods and conditions are applied, or selections are made according to commercial instructions.

Graphite Material

In a graphite material provided in the first aspect of the present disclosure, the following conditions are satisfied:

a. La≤72nm, Lc≤15nm; wherein La is a lattice constant of a graphite crystal in a 110 plane in the graphite material, and Lc is a lattice constant of the graphite crystal in a 002 plane in the graphite material;

b. F≥15mN, wherein F is a particle crushing force.

In some preferred embodiments, La≤60nm. The La is, for example, 53nm, 58nm, 59nm, 61nm, 62nm, 65nm, 66nm or 67nm.

In some preferred embodiments, Lc≤12nm. The Lc is, for example, 8.8nm, 9.6nm, 10.3nm, 10.8nm, 10.9nm, 11.1nm, 12.9nm, 13.1nm or 13.2nm.

In the present disclosure, the La is calculated according to $La = \frac{1.84\lambda}{\beta cos\theta}$, wherein λ is 0.0027nm, β is a full width at half maximum, and θ is calculated according to $d(110) = \frac{\lambda}{2sin\theta}$. A specific test method for β and d(110) is as follows. The graphite material and 50mL of n-hexane are added in a beaker, and ultrasonic oscillation is conducted for 5 minutes. Then a pipette gun is utilized to aspirate 100μL of solution and drop the solution onto a TEM observation copper grid. Rapid drying is conducted on the copper grid and then the copper grid is observed. TEM is utilized to conduct a selected area diffraction observation and calibration to obtain β and d(110).

In the present disclosure, the Lc is calculated according to $Lc = \frac{0.9\lambda}{\beta cos\theta'}$, wherein λ is 0.0027nm, β is the full width at half maximum, and θ' is calculated according to $d(002) = \frac{\lambda}{2sin\theta'}$. A specific test method for β and d(002) is as follows. The graphite material and 50mL of n-hexane are added to the beaker, and ultrasonic oscillation is conducted for 5 minutes. Then the pipette gun is utilized to aspirate 100μL of solution and drop the solution onto the TEM observation copper grid. Rapid drying is conducted on the copper grid and then the copper grid is observed. TEM is utilized to conduct the selected area diffraction observation and calibration to obtain β and d(002).

In the present disclosure, the particle crushing force (F) refers to a critical pressure at which fracture occurs when a single particle of the material is subjected to compressive force testing. Preferably, 15mN≤F≤25mN. The particle crushing force is, for example, 15mN, 16mN, 17mN, 18mN, 19mN, 20mN, 21mN or 23mN.

In the present disclosure, the particle crushing force may be tested using a Xiamen Ynano Technology Single Particle Force Testing System (SPFT2000), and the specific test method is as follows. 0.5g of graphite material is added to a beaker containing 20ml of anhydrous ethanol, and the above mixture is ultrasonically dispersed for 5 minutes to obtain a dispersion. 100μL of the above dispersion is taken and dropped onto a glass slide, and the glass slide is transferred to a SPFT2000 sample observation stage. An optical microscope of SPFT2000 is utilized to locate a single particle, and an indenter is controlled for pressing downward at a uniform speed. A stress mutation point during the particle compression process is recorded as the particle crushing force.

In a preferred embodiment, the graphite material satisfies 0<S≤0.1, preferably 0<S≤0.07, wherein S is a particle size distribution symmetry.

In some specific embodiments, the particle size distribution symmetry is, for example, 0.01, 0.035, 0.038, 0.051, 0.052, 0.056, 0.067, 0.072, 0.083, 0.096 or 0.1.

The particle size distribution symmetry (S) is calculated via [D(3,4)-Dv50]/Dv50; wherein D(3,4) and Dv50 are obtained by testing according to GB/T 41949-2022. The smaller the particle size distribution symmetry, the better the particle size distribution symmetry, and the higher the peak of the differential curve of the particle size distribution.

In a specific embodiment, the graphite material satisfies: the La is 62nm, the Lc is 12nm, the particle crushing force is 21mN, and the particle size distribution symmetry is 0.051.

In a specific embodiment, the graphite material satisfies: the La is 58nm, the Lc is 9.6nm, the particle crushing force is 17mN, and the particle size distribution symmetry is 0.1.

In a specific embodiment, the graphite material satisfies: the La is 72nm, the Lc is 15nm, the particle crushing force is 25mN, and the particle size distribution symmetry is 0.01.

In a specific embodiment, the graphite material satisfies: the La is 60nm, the Lc is 11.1nm, the particle crushing force is 20mN, and the particle size distribution symmetry is 0.052.

In a specific embodiment, the graphite material satisfies: the La is 65nm, the Lc is 13.2nm, the particle crushing force is 23mN, and the particle size distribution symmetry is 0.067.

In a specific embodiment, the graphite material satisfies: the La is 61nm, the Lc is 10.9nm, the particle crushing force is 18mN, and the particle size distribution symmetry is 0.038.

In a specific embodiment, the graphite material satisfies: the La is 66nm, the Lc is 12.9nm, the particle crushing force is 23mN, and the particle size distribution symmetry is 0.067.

In a specific embodiment, the graphite material satisfies: the La is 62nm, the Lc is 12nm, the particle crushing force is 23mN, and the particle size distribution symmetry is 0.056.

In a specific embodiment, the graphite material satisfies: the La is 59nm, the Lc is 10.8nm, the particle crushing force is 19mN, and the particle size distribution symmetry is 0.072.

In a specific embodiment, the graphite material satisfies: the La is 53nm, the Lc is 8.8nm, the particle crushing force is 15mN, and the particle size distribution symmetry is 0.051.

In a specific embodiment, the graphite material satisfies: the La is 67nm, the Lc is 13.1nm, the particle crushing force is 23mN, and the particle size distribution symmetry is 0.083.

In a specific embodiment, the graphite material satisfies: the La is 58nm, the Lc is 10.3nm, the particle crushing force is 16mN, and the particle size distribution symmetry is 0.096.

In some optional embodiments, a Dv50 particle size of the graphite material is $10\mu m$-$13\mu m$, for example, $9.5\mu m$.

In the present disclosure, a sphericity (D) refers to a ratio of a surface area of a sphere having the same volume as a material particle to a surface area of the material particle. Generally speaking, particles that are closer to spherical in morphology have a sphericity closer to 1. The sphericity of a sphere is equal to 1, and the sphericity of other objects is less than 1. The sphericity of the graphite material is preferably 0.5-1.0, for example, 0.58, 0.59, 0.68, 0.7, 0.71, 0.73, 0.75, or 0.92.

In the present disclosure, the sphericity may be obtained by testing according to GB/T 37406-2019.

In some optional embodiments, a carbon content of the graphite material is greater than 99.9%, with the percentage being calculated as a mass percentage of the graphite material.

In some optional embodiments, the graphite material is microcrystalline graphite.

Method for Preparing Graphite Material

In the preparation method of the graphite material as described above provided in the second aspect of the present disclosure, the preparation method includes the following steps:

S1, conducting a first mixing by mixing a graphite precursor and a binder, adding a solvent to conduct a second mixing to obtain a mixture; wherein a temperature of the first mixing is 5°C-20°C below a softening point of the binder;

S2, pressing the mixture to obtain a graphite green body;

S3, laying the graphite green body on a surface layer of graphitization equipment, laying a graphitization insulation material on the graphite green body, conducting a graphitization treatment, the graphite green body obtaining graphitized graphite green body through the graphitization treatment;

S4, conducting a crushing treatment on the graphitized graphite green body to obtain a graphite material.

In some preferred embodiments, the temperature of the first mixing is 8°C-15°C below the softening point of the binder, for example, 10°C.

In some optional embodiments, in step S1, a sphericity D of the graphite precursor is 0.7-1.0.

In some optional embodiments, in step S1, the graphite precursor is natural microcrystalline graphite. The natural microcrystalline graphite is preferably obtained by preprocessing microcrystalline graphite ore; the preprocessing preferably includes water washing and a spheroidization treatment.

In some optional embodiments, in step S1, a fixed carbon content of the graphite precursor is 88%-91%.

In some optional embodiments, in step S1, a Dv50 particle size of the graphite precursor is $6\mu m$-$8\mu m$, for example, $7\mu m$.

In some optional embodiments, in step S1, a mass ratio of the graphite precursor to the binder is (4-7): 1, for example, 5:1.

In some optional embodiments, in step S1, the binder includes one or more of petroleum pitch, phenolic resin, epoxy resin, and coal tar.

In some optional embodiments, in step S1, the softening point of the binder is 100°C-250°C, preferably 100°C-130°C, for example, 110°C.

In some optional embodiments, in step S1, the solvent is selected from one or more of xylene, toluene, and n-hexane.

In some optional embodiments, in step S1, a solid content of the mixture is 40%-60%, for example, 45%, with the percentage being calculated as a mass percentage of a solid ingredient of the mixture to a total mass of the mixture.

In some optional embodiments, in step S1, the method of performing the first mixing is stirring; wherein a time of the stirring is preferably 0.5 hour to 2 hours, for example, 1 hour; a speed of the stirring is preferably 30r/min-90r/min.

In some optional embodiments, in step S1, the method of performing the second mixing is stirring; wherein a time of the stirring is preferably 0.5 hour to 2 hours, for example, 1 hour; a speed of the stirring is preferably 60r/min-120r/min; a temperature of the stirring is preferably room temperature.

In some optional embodiments, in step S1, the method for preparing the graphite precursor includes the following steps: conducting water washing and flotation on graphite ore, then conducting coarse crushing and a spheroidization treatment to obtain the graphite precursor; wherein, a time for the spheroidization treatment is preferably 4 hours to 24 hours; the spheroidization treatment is conducted preferably through a honeycomb mill.

In some optional embodiments, in step S2, the pressing is isostatic pressing; wherein, a time of the isostatic pressing is preferably 18 hours to 30 hours, for example, 24 hours; the pressure of the isostatic pressing is preferably 150MPa-300MPa, for example 200MPa.

In some optional embodiments, in step S3, a temperature of the graphitization treatment is greater than 1600°C.

In some optional embodiments, in step S3, a time for the graphitization treatment is 18 hours to 40 hours, preferably 24 hours to 36 hours.

In some optional embodiments, in step S3, the graphitization insulation material is petroleum coke and/or pitch coke.

In some optional embodiments, in step S3, the graphitization equipment is a graphitization furnace.

In some optional embodiments, in step S4, the crushing treatment further includes sieving and magnetic purification.

In some optional embodiments, in step S4, the crushing treatment is crushing until the Dv50 particle size of the particles is $10\mu m$-$13\mu m$.

Electrochemical Device

In the electrochemical device provided in the third aspect of the present disclosure, a negative electrode sheet is further included. The negative electrode sheet includes a negative electrode material layer and a negative electrode current collector, and the negative electrode material layer includes the graphite material as described above.

In the present disclosure, the electrochemical device is preferably a battery.

In an optional embodiment, the electrochemical device is a lithium-ion battery; the lithium-ion battery further includes a positive electrode sheet, a separator and an electrolyte.

Negative Electrode Sheet

In the present disclosure, the negative electrode material layer is disposed on at least one surface of the negative electrode current collector.

In some embodiments, the negative electrode material layer further includes a thickener.

The addition of the thickener may improve a system viscosity of various ingredients in the negative electrode slurry, and may be a thickener conventionally used in the art for preparing negative electrode sheets, for example, sodium carboxymethyl cellulose (CMC).

In some embodiments, the negative electrode material layer further includes a conductive agent.

The conductive agent is not particularly limited herein, as long as the conductive agent has conductivity without causing chemical changes in the battery. For example, the conductive agent specifically may adopt: graphite, such as natural graphite or synthetic graphite; carbon-based materials, such as carbon black (Super P), acetylene black, Ketjen black, channel black, furnace black, lamp black, thermal carbon black or carbon fiber; metal powder or metal fiber, such as copper, nickel, aluminum or silver; conductive whiskers, such as zinc oxide whiskers or potassium titanate whiskers; conductive metal oxides, such as titanium dioxide; or conductive polymers, such as polyphenylene derivatives, etc.

In some embodiments, the negative electrode material layer further includes a binder.

The type of the binder is not particularly limited herein, and may be freely selected from polyvinylidene fluoride, polyvinylidene fluoride, polyvinyl alcohol, carboxymethyl cellulose, starch, hydroxypropyl cellulose, regenerated cellulose, polyvinylpyrrolidone, polytetrafluoroethylene, polyethylene, polypropylene, polyacrylic acid (PAA), ethylenepropylene-diene terpolymer and sulfonates thereof, styrene-butadiene rubber (SBR), fluororubber and various copolymers, such as PAA and SBR.

In some specific embodiments, in the negative electrode material layer, a mass ratio of the graphite material, the conductive agent, the binder and the thickener is 97.2:0.5:1.8:0.5.

In the present disclosure, the negative electrode current collector may be a conventional negative electrode current collector in the art. The negative electrode current collector serves as a substrate for supporting the negative electrode material layer, and is typically a metal foil having a thickness of 3 micrometers to 500 micrometers. There is no particular limitation on the material, as long as the material has high electrical conductivity and does not cause chemical reactions in the secondary battery system. For example, the material may be a foil formed by surface treatment of nickel, titanium, aluminum, nickel, silver, stainless steel, carbon, or the like. The negative electrode current collector typically has a smooth surface, but fine textures may also be formed on the surface thereof to improve the adhesion between the negative electrode material layer and the current collector. In addition to foil materials, the negative electrode current collector may also adopt any one or combination of various forms such as film, mesh, porous, foam, or non-woven fabric. Generally, the negative electrode current collector is a copper foil.

In some embodiments, the method for preparing the negative electrode sheet includes the following steps: coating a negative electrode slurry obtained by fully stirring and mixing various ingredients of the negative electrode material layer uniformly in a solvent on at least one surface of the negative electrode current collector, then performing drying, cold pressing, and slitting to obtain the negative electrode sheet.

Positive Electrode Sheet

In the present disclosure, the positive electrode sheet includes a positive electrode current collector and a positive electrode material layer disposed on at least one surface of the positive electrode current collector.

In the present disclosure, the positive electrode active material in the positive electrode material layer may be positive electrode active materials conventionally adopted in the art, for example, one or more of lithium nickel cobalt manganese oxide, lithium nickel manganese oxide, lithium iron phosphate, lithium manganese iron phosphate, and lithium cobalt oxide.

In some optional embodiments, the positive electrode material layer further includes a binder.

The type of the binder is not particularly limited herein, and may be freely selected from polyvinylidene difluoride, polyvinylidene fluoride (PVDF), polyvinyl alcohol, carboxymethyl cellulose, starch, hydroxypropyl cellulose, regenerated cellulose, polyvinylpyrrolidone, polytetrafluoroethylene, polyethylene, polypropylene, polyacrylic acid (PAA), ethylenepropylene-diene terpolymer and sulfonated products thereof, styrene-butadiene rubber (SBR), fluororubber and various copolymers, such as PVDF.

In some optional embodiments, a content of the binder is 1%-10%, for example 1.8%, with the percentage being calculated as a percentage of a total mass of the positive electrode material layer.

In some optional embodiments, the positive electrode material layer further includes a conductive agent.

The type of the conductive agent is not particularly limited herein, and is a reagent used for ensuring that the electrode has a good charge-discharge performance. The conductive agent may be optionally selected from graphite materials such as natural graphite and synthetic graphite, carbon black materials such as carbon black SP, acetylene black, Ketjen black, channel black, furnace black, lamp black, and thermal cracking carbon black, conductive fibers such as carbon fiber and metal fiber, metal powders such as carbon fluoride powder, aluminum powder, and nickel powder, conductive whiskers such as zinc oxide and potassium titanate, and conductive metal oxides such as titanium dioxide or polyphenylene derivatives.

In a specific embodiment, the conductive agent is conductive carbon SP.

In some optional embodiments, a content of the conductive agent is 0.2%-3%, for example, 1.2%, with the percentage being calculated as a percentage of the total mass of the positive electrode material layer.

In some embodiments, in the positive electrode material layer, a mass ratio of the positive electrode active material, the conductive agent and the binder is 97:1.2:1.8.

In the present disclosure, the positive electrode current collector may be a conventional positive electrode current collector in the art. The positive electrode current collector serves as a substrate for supporting the positive electrode material layer, and is typically a metal foil having a thickness of 3 micrometers to 500 micrometers. There is no particular limitation on the material, as long as the material has high electrical conductivity and does not cause chemical reactions in the secondary battery system. For example, the material may be a foil formed by surface treatment of nickel, titanium, aluminum, nickel, silver, stainless steel, carbon, etc. The positive electrode current collector typically has a smooth surface, but fine textures may also be formed on the surface thereof to improve the adhesion between the positive electrode material layer and the current collector. In addition to foil materials, the positive electrode current collector may also adopt any one or combination of various forms such as film, mesh, porous, foam, or non-woven fabric. Generally, the positive electrode current collector is an aluminum foil.

In some embodiments, the method for preparing the positive electrode sheet includes: coating a positive electrode slurry obtained by fully stirring and mixing various ingredients of the positive electrode material layer uniformly in a solvent onto at least one surface of the positive electrode current collector, then performing drying, and roll pressing for compaction to obtain the positive electrode sheet.

In some optional embodiments, the solvent includes one or more of N-methylpyrrolidone (NMP), dimethyl carbonate, ethylene carbonate and diethylene carbonate, such as NMP.

Separator

In the present disclosure, the separator may be a separator conventionally adopted in the art.

In some optional embodiments, the separator may be selected from a polypropylene film or a polyethylene film.

An air permeability of the separator may be 180s/100mL-380s/100mL.

A porosity of the separator may be 30%-50%.

A thickness of the separator may be $9\mu m$-$18\mu m$.

In a specific embodiment, the separator is a polyethylene film; the thickness of the separator is $11\mu m$; the air permeability of the separator is 230s/100mL; the porosity of the separator is 40%.

Electrolyte

In some embodiments, the electrolyte may be an electrolyte conventionally used for batteries in the art, generally including a non-aqueous solvent, lithium salt, and additives.

In some embodiments, the method for preparing the lithium-ion battery includes the following steps: stacking the positive electrode sheet, the separator, and the negative electrode sheet in sequence, so that the separator is positioned between the positive and negative electrode sheets to serve an isolation function; then wrapping the stacked positive electrode sheet, the separator, and the negative electrode sheet with an aluminum plastic film, after drying, injecting the electrolyte, then performing packaging, standing, formation and so on, thus finally obtaining a pouch battery.

Electronic apparatus

In an electronic apparatus provided in the fourth aspect of the present disclosure, the electronic apparatus includes the electrochemical device as described above.

Exemplarily, the electronic apparatus of the present disclosure may be but is not limited to mobile devices (such as mobile phones, tablet computers, notebook computers, video recorders, portable printers/copiers, etc.), electric vehicles (such as pure electric vehicles, hybrid electric vehicles, plug-in hybrid electric vehicles, electric bicycles, electric scooters, electric golf carts, electric trucks, etc.), electric trains, ships and satellites, energy storage systems and backup power sources, etc.

On the basis of conforming to common knowledge in the art, the above preferred conditions may be combined freely to obtain various preferred examples of the present disclosure.

The reagents and raw materials used in the present disclosure are all commercially available.

The main reagents adopted in the following examples and comparative examples are as follows.

Microcrystalline graphite ore was purchased from Hunan Chenzhou Lutang Graphite Processing Factory, with the model being first-grade earthy graphite, carbon content >85%, and impurities being silicon and metal elements.

Petroleum pitch (softening point of 110°C) was purchased from Liaoning Xinde New Material Technology Co., Ltd., with model number XD-110.

Petroleum pitch (softening point of 130°C) was purchased from Liaoning Xinde New Material Technology Co., Ltd., with model number XD-130.

Petroleum pitch (softening point of 250°C) was purchased from Liaoning Xinde New Material Technology Co., Ltd., with model number XD-250.

Petroleum pitch (softening point of 280°C) was purchased from Liaoning Xinde New Material Technology Co., Ltd., with model number XD-280.

The commercial graphite material was purchased from Shanghai Shanshan Technology Co., Ltd., with model number FSN-1.

Example 1

(1) Preparation of Graphite Material

S0, subjecting microcrystalline graphite ore to preliminary water washing and flotation to remove soil, so that a fixed carbon content of the microcrystalline graphite reaches 90%; after coarse crushing, using a honeycomb mill to conduct a spheroidization treatment for 6 hours to obtain a graphite precursor with a sphericity of 0.83 (Dv50 particle size of $7\mu m$);

S1, mixing the above graphite precursor with petroleum pitch having a softening point of 110°C with a mixing mass ratio of 5:1, heating the above mixture to 10°C below the softening point (100°C) and stirring the mixture for 1 hour (with a stirring speed of 15r/min-20r/min), then adding an appropriate amount of xylene solvent to assist the petroleum pitch to disperse, continuing the stirring for 1 hour to obtain a mixture (with a solid content of 45%);

S2, then adding the mixture to a rubber mold having a dimension of $40\times30cm\times30cm$, subjecting the molded mixture to 200MPa isostatic pressing for 24 hours, and then demolding the molded mixture to obtain a graphite green body;

S3, laying the graphite green body as a graphitization insulation material on a surface layer of an Acheson graphitization furnace, then continuously laying a layer of petroleum coke, and performing graphitization to conduct gasification purification with a graphitization temperature being 3000°C and a time being 48 hours; wherein, the graphite green body forms a graphitized blank;

S4, taking out the graphitized blank obtained in step S3 to conduct crushing, sieving and magnetic purification, thus obtaining the graphite material (with a Dv50 particle size being $10\mu m$, a sphericity being 0.73, and a carbon content being 99.9%).

(2) Preparation of Lithium-Ion Battery

The positive electrode sheet, the separator and the negative electrode sheet are wound to obtain a battery core, the battery core is then packaged in a packaging casing and injected with an electrolyte.

The preparation of the negative electrode sheet includes the following steps: mixing the obtained graphite material, a conductive agent (SP), a binder (PAA and SBR, with a mass ratio of 1.3:0.5), and a thickener (carboxymethyl cellulose, CMC) according to a mass ratio of 97.2:0.5:1.8:0.5 (totaling 100 mass parts), then adding 82 mass parts of deionized water and mixing them uniformly to obtain a negative electrode slurry; then uniformly coating the negative electrode slurry on a copper foil; and then performing drying, rolling, cutting and other processes to prepare the negative electrode sheet.

The preparation of the positive electrode sheet includes the following steps: mixing positive electrode active materials NCM622, PVDF and SP according to a mass ratio of 97:1.8:1.2 (totaling 100 mass parts), then adding 82 mass parts of NMP to obtain a positive electrode slurry; coating the obtained positive electrode slurry on at least one surface of an aluminum foil, performing drying, and roll-pressing for compaction to obtain the positive electrode sheet.

The separator is a polyethylene film; the thickness of the separator is $11\mu m$; the air permeability of the separator is 230s/100mL; the porosity of the separator is 40%.

The electrolyte adopts commercial electrolyte (manufactured by Xinya Shanshan New Material Technology (Quzhou) Co., Ltd., with model number E3).

Example 2

The difference between Example 2 and Example 1 lies only in: in the preparation of the graphite material, in step S0, the time for the spheroidization treatment is 4 hours, the sphericity of the obtained graphite precursor is 0.7, and the remaining conditions are the same as Example 1.

Example 3

The difference between Example 3 and Example 1 lies only in: in the preparation of the graphite material, in step S0, the time for the spheroidization treatment is 24 hours, the sphericity of the obtained graphite precursor is 0.98, and the remaining conditions are the same as Example 1.

Example 4

The difference between Example 4 and Example 1 lies only in: in the preparation of the graphite material, in step S1, the petroleum pitch has a softening point of 130°C and is heated to 120°C, and the remaining conditions are the same as Example 1.

Example 5

The difference between Example 5 and Example 1 lies only in: in the preparation of the graphite material, in step S1, the petroleum pitch has a softening point of 100°C and is heated to 90°C, and the remaining conditions are the same as Example 1.

Example 6

The difference between Example 6 and Example 1 lies only in: in the preparation of the graphite material, in step S3, the graphitization temperature is 2800°C, and the remaining conditions are the same as Example 1.

Example 7

The difference between Example 7 and Example 1 lies only in: in the preparation of the graphite material, in step S3, the graphitization temperature is 3200°C, and the remaining conditions are the same as Example 1.

Example 8

The difference between Example 8 and Example 1 lies only in: in the preparation of the graphite material, in step S4, the graphitized blank is subjected to crushing, sieving and magnetic purification, the Dv50 particle size is controlled to be $13\mu m$, and the remaining conditions are the same as Example 1.

Example 9

The difference between Example 9 and Example 1 lies only in: in the preparation of the graphite material, in step S1, the softening point of the petroleum pitch is 250°C and is heated to 240°C, and the remaining conditions are the same as Example 1.

Example 10

The difference between Example 10 and Example 1 lies only in: in the preparation of the graphite material, in step S1, the mass ratio of the graphite precursor to the petroleum pitch is 4:1, and the remaining conditions are the same as Example 1.

Example 11

The difference between Example 11 and Example 1 lies only in: in the preparation of the graphite material, in step S1, the mass ratio of the graphite precursor to the petroleum pitch is 7:1, meanwhile, in step S4, the graphitized blank is subjected to crushing, sieving and magnetic purification, the Dv50 particle size is controlled to be $9.5\mu m$, and the remaining conditions are the same as Example 1.

Example 12

The difference between Example 12 and Example 1 lies only in: in the preparation of the graphite material, in step S3, the graphitization temperature is 1700°C, and the remaining conditions are the same as Example 1.

Comparative Example 1

The difference between Comparative Example 1 and Example 1 lies only in: in the preparation of the graphite material, in step S0, the time for the spheroidization treatment is 2 hours, the sphericity of the obtained graphite precursor is 0.6, and the remaining conditions are the same as Example 1.

Comparative Example 2

The difference between Comparative Example 2 and Example 1 lies only in: in the preparation of the graphite material, in step S1, the petroleum pitch has a softening point of 280°C and is heated to 270°C, and the remaining conditions are the same as Example 1.

Comparative Example 3

The difference between Comparative Example 3 and Example 1 lies only in: in the preparation of the graphite material, in step S3, the graphitization temperature is 3500°C, and the remaining conditions are the same as Example 1.

Comparative Example 4

The difference between Comparative Example 4 and Example 1 lies only in: in the preparation of the graphite material, in step S4, the graphitized blank is crushed, sieved and magnetically purified, with the Dv50 particle size controlled to be 7$\mu$m, and the remaining conditions are the same as Example 1.

Comparative Example 5

The difference between Comparative Example 5 and Example 1 lies only in: there is no preparation of the graphite material, in the preparation of lithium-ion battery, commercial graphite material (FSN-1) is adopted as the negative electrode active material, and the remaining conditions are the same as Example 1.

Comparative Example 6

The difference between Comparative Example 6 and Example 1 lies only in: in the preparation of the graphite material, in step S3, no layer of petroleum coke is laid; meanwhile, in step S4, the graphitized blank is crushed, sieved and magnetically purified, with the Dv50 particle size controlled to be 11.5$\mu$m, and the remaining conditions are the same as Example 1.

Comparative Example 7

The difference between Comparative Example 7 and Example 1 lies only in: in the preparation of the graphite material, in step S1, the heating is performed to reach 4°C below the softening point (106°C), and the remaining conditions are the same as Example 1.

Comparative Example 8

The difference between Comparative Example 8 and Example 1 lies only in: in the preparation of the graphite material, steps S2-S3 are replaced with the following steps:

S2, conducting a heating treatment on the mixture (temperature being 700°C, time being 3 hours).
S3, conducting a graphitization treatment (temperature being 3000°C, time being 48 hours).

The remaining conditions are the same as Example 1.

Comparative Example 9

The difference between Comparative Example 9 and Example 1 lies only in: in the preparation of the graphite material, step S3 is replaced with the following steps:

S3-1, conducting an acid-base treatment: first using aqua regia (mass fraction of 30%) and hydrofluoric acid (mass fraction of 40%) sequentially for performing an acid treatment, then using a sodium hydroxide solution having a mass fraction of 40% for processing;
S3-2, then conducting a high-temperature purification (temperature being 1200°C, time being 6 hours).

Meanwhile, in step S4, the graphitized blank is subjected to crushing, sieving and magnetic purification, and the Dv50 particle size is controlled to be 6.3$\mu$m.

The remaining conditions are the same as Example 1.

Effect Example 1

The graphite materials obtained in Examples 1-12 and Comparative Examples 1-9 were tested for lattice constants La and Lc, particle crushing force F, particle size distribution symmetry S, and sphericity D.

(1) Lattice constants La and Lc:

The obtained graphite material was used as a test sample. The graphite material and 50mL of n-hexane were added in a beaker, and ultrasonic oscillation was conducted for 5 minutes. Then a pipette gun was utilized to aspirate 100μL of solution and drop the solution onto a TEM observation copper grid. Rapid drying was conducted on the copper grid and then the copper grid was observed.

TEM was used to conduct a selected area diffraction observation and calibration to obtain the d(110) and a full width at half maximum $\beta$ of the sample. Then according to $d(110) = \dfrac{\lambda}{2sin\theta}$, wherein $\lambda$ is 0.0027nm, $\theta$ may be calculated; then $La = \dfrac{1.84\lambda}{\beta cos\theta}$.

Through TEM, diffraction observation and calibration were conducted to obtain the d(002) and a full width at half maximum $\beta$ of the sample. Then according to $d(002) = \dfrac{\lambda}{2sin\theta'}$, wherein $\lambda$ is 0.0027nm, $\theta'$ may be calculated, then $Lc = \dfrac{0.9\lambda}{\beta cos\theta'}$.

(2) Particle crushing force F

The testing of particle crushing force was conducted using the Xiamen Yuaneng Technology Single Particle Mechanical Properties Testing System (SPFT2000), as detailed below.

0.5g of graphite material was added to a beaker containing 20ml of anhydrous ethanol, and the above mixture was ultrasonically dispersed for 5 minutes to obtain a dispersion. 100μL of the above dispersion was taken and dropped onto a glass slide, and the glass slide was transferred to a SPFT2000 sample observation stage. An optical microscope of SPFT2000 was utilized to locate a single particle, and an indenter was controlled for pressing downward at a uniform speed. A stress mutation point during the particle compression process was recorded as the particle crushing force.

(3) Particle Size Distribution Symmetry S

Referring to GB/T 41949-2022, the graphite material was tested using a laser particle size diffraction analyzer (Malvern 3000), D(3,4) and Dv50 particle size data were directly read from the test results, and then S was calculated according to S=[D(3,4)-Dv50]/Dv50 to obtain S.

(4) Sphericity D

Sphericity was tested according to GB/T 37406-2019.

(5) 2T powder compaction density (2T powder compaction)

A 2T powder compaction density test was conducted on the graphite material powder in accordance with the national standard GB/T 24533-2019.

The above test results are shown in Table 1.

Effect Example 2

The following electrochemical performance tests were conducted on the lithium-ion batteries prepared in Examples 1-12 and Comparative Examples 1-9.

Before testing, the obtained lithium-ion battery was first activated by charging and discharging for one cycle at 25°C with 0.1C in a battery operating voltage range of 2.8V (discharge cut-off voltage) to 4.35V (charge cut-off voltage). Then, the following tests were conducted.

(1) Charging Capacity and Discharging Capacity

The lithium-ion battery was connected to a blue electric charge-discharge testing instrument for extended cycle charge and discharge tests. The charging capacity and discharging capacity were to be measured. An operating voltage range for the battery test was set from 2.8V (discharge cut-off voltage) to 4.35V (charge cut-off voltage). The test rate was set to be 0.3C.

$$\text{Initial efficiency} = \text{discharging capacity/charging capacity} \times 100\%.$$

(2) Fast-charging time

The battery core was directly charged at a current of 0.33C until reaching a State of Charge (SOC) of 8%. Subsequently, based on the actual measurement of a three-electrode window of the battery core, charging windows at 10%, 20%, 30%, 40%, 50%, 60%, 70%, and 80% SOC were respectively identified as C1, C2, C3, C4, C5, C6, C7, and C8. The method involved incrementally charging to 80%, specifically using C1 for 8%-10%, C2 for 10%-20%, and so forth. The charging time from 8% to 80% SOC was recorded as a standard for assessing fast the charging capability. The calculation formula is as follows: $T = (0.02/C1 + 0.1/C2 + 0.1/C3 + 0.1/C4 + 0.1/C5 + 0.1/C6 + 0.1/C7 + 0.1/C8) \times 60$.

(3) Number of Cycles

The lithium-ion battery was connected to the blue electric charge-discharge testing instrument and subjected to an extended cycle at a rate of 0.3C, which was continued until the capacity in cycle n is less than 80% of the capacity in the first cycle at 0.3C. The capacity retention rate in cycle n-1 was defined as 80%. The total number of cycles is recorded as cycle n-1, at which point testing was ended.

(4) Duration of Storage

At a temperature of 25°C, the battery core was charged with a constant current of 0.33C and the capacity thereof was recorded as $C_0$. Then the battery core was stored under high-temperature conditions of 60°C. Subsequently, the battery core was retrieved at intervals of every 7 days for testing the capacity thereof at room temperature, and the capacities were recorded as $C_1, C_2, ... C_n$. The duration of storage was defined as the number of days until $C_n$ was less than or equal to 80% of $C_0$ for the first time.

(5) Self-Discharge Performance

At a temperature of 25°C, the battery core was fully charged at a constant current of 0.33C, and the capacity was recorded as $C_0$, and the voltage at this point was recorded as $V_1$. After storing for 90 days, the voltage was measured and recorded as $V_2$. Then the self-discharge voltage was calculated as $V_1$ minus $V_2$.

The above test results are shown in Table 2.

Table 1

| Number | La/nm | Lc/nm | Particle crushing force F/mN | Particle size distribution symmetry S | Dv50 particle size of graphite material/$\mu$m | Sphericity D of graphite material | 2T powder compaction/ (g.cc$^{-1}$) |
|---|---|---|---|---|---|---|---|
| Example 1 | 62 | 12 | 21 | 0.051 | 10 | 0.73 | 1.66 |
| Example 2 | 58 | 9.6 | 17 | 0.1 | 10 | 0.58 | 1.61 |
| Example 3 | 72 | 15 | 25 | 0.01 | 10 | 0.92 | 1.7 |
| Example 4 | 60 | 11.1 | 20 | 0.052 | 10 | 0.7 | 1.64 |
| Example 5 | 65 | 13.2 | 23 | 0.035 | 10 | 0.75 | 1.66 |
| Example 6 | 61 | 10.9 | 18 | 0.038 | 10 | 0.71 | 1.64 |
| Example 7 | 66 | 12.9 | 23 | 0.067 | 10 | 0.75 | 1.75 |
| Example 8 | 62 | 12 | 23 | 0.056 | 13 | 0.75 | 1.6 |

(continued)

| Number | La/nm | Lc/nm | Particle crushing force F/mN | Particle size distribution symmetry S | Dv50 particle size of graphite material/μm | Sphericity D of graphite material | 2T powder compaction/ (g.cc⁻¹) |
|---|---|---|---|---|---|---|---|
| Example 9 | 59 | 10.8 | 19 | 0.072 | 10 | 0.73 | 1.63 |
| Example 10 | 53 | 8.8 | 15 | 0.051 | 10 | 0.59 | 1.59 |
| Example 11 | 67 | 13.1 | 23 | 0.083 | 9.5 | 0.73 | 1.62 |
| Example 12 | 58 | 10.3 | 16 | 0.096 | 10 | 0.68 | 1.6 |
| Comparative Example 1 | 82 | 23 | 12 | 0.13 | 10 | 0.47 | 1.57 |
| Comparative Example 2 | 74 | 18 | 27 | 0.26 | 10 | 0.68 | 1.55 |
| Comparative Example 3 | 102 | 31 | 13 | 0.31 | 10 | 0.63 | 1.58 |
| Comparative Example 4 | 63 | 12 | 29 | 0.45 | 7 | 0.59 | 1.53 |
| Comparative Example 5 | 128 | 56 | 11 | 0.13 | 10.2 | 0.51 | 1.6 |
| Comparative Example 6 | 113 | 47 | 13 | 0.35 | 11.5 | 0.67 | 1.51 |
| Comparative Example 7 | 73 | 16 | 26 | 0.12 | 10 | 0.68 | 1.58 |
| Comparative Example 8 | 89 | 26 | 14 | 0.18 | 10 | 0.56 | 1.59 |
| Comparative Example 9 | 125 | 43 | 6 | 0.23 | 6.3 | 0.38 | 1.55 |

Table 2

| Number | Charging capacity/(mAh/g) | Discharging capacity/(mAh/g) | Initial efficiency/(%) | Fast-charging time/min | Number of cycles/cycle | Duration of storage/days | Self-discharge voltage/V |
|---|---|---|---|---|---|---|---|
| Example 1 | 397.6 | 362.2 | 91.1 | 12.5 | 2123 | 259 | 0.26 |
| Example 2 | 398.1 | 359.1 | 90.2 | 10.8 | 1824 | 224 | 0.38 |
| Example 3 | 398.8 | 365.3 | 91.6 | 13.9 | 2356 | 294 | 0.18 |
| Example 4 | 396.4 | 360.3 | 90.9 | 12.2 | 2035 | 238 | 0.33 |
| Example 5 | 397.6 | 361.8 | 91 | 13.1 | 2098 | 266 | 0.22 |
| Example 6 | 394.9 | 358.6 | 90.8 | 11.8 | 1765 | 203 | 0.28 |
| Example 7 | 394 | 363.7 | 92.3 | 14.1 | 2356 | 308 | 0.16 |
| Example 8 | 395 | 360.6 | 91.3 | 11.1 | 1758 | 189 | 0.32 |
| Example 9 | 395.9 | 358.7 | 90.6 | 12.7 | 1935 | 224 | 0.36 |
| Example 10 | 398.2 | 359.1 | 90.2 | 10.4 | 1703 | 203 | 0.42 |
| Example 11 | 395 | 360.1 | 91.2 | 13.2 | 1815 | 196 | 0.31 |
| Example 12 | 402 | 360.9 | 90.2 | 9.7 | 1705 | 189 | 0.67 |
| Comparative Example 1 | 395.6 | 352.1 | 89.1 | 14.8 | 1325 | 140 | 0.56 |
| Comparative Example 2 | 403.6 | 357.2 | 88.5 | 14.5 | 1616 | 126 | 0.62 |
| Comparative Example 3 | 396.1 | 354.5 | 89.5 | 20.3 | 1426 | 210 | 0.73 |
| Comparative Example 4 | 399.4 | 358.7 | 89.8 | 10.2 | 1056 | 105 | 0.88 |
| Comparative Example 5 | 370.5 | 345.2 | 93.2 | 33.2 | 3156 | 357 | 0.21 |
| Comparative Example 6 | 386.3 | 346.2 | 89.6 | 17.3 | 1367 | 154 | 0.39 |
| Comparative Example 7 | 402.1 | 357.2 | 88.8 | 16.1 | 1016 | 147 | 0.37 |
| Comparative Example 8 | 395.8 | 353.4 | 89.3 | 15.2 | 1355 | 168 | 0.59 |
| Comparative Example 9 | 406.2 | 356.1 | 87.6 | 16.3 | 867 | 98 | 0.72 |

According to Table 1 and Table 2, the graphite materials prepared in Examples 1-12 have La between 53nm-72nm, Lc between 8.8nm-15nm, particle crushing force F between 15mN-25mN, particle size distribution symmetry S between 0.01-0.1, Dv50 particle size between 9.5μm-13μm, sphericity D between 0.58-0.92, and 2T powder compaction density between 1.59g.cc$^{-1}$-1.75g.cc$^{-1}$. The lithium-ion battery obtained using this graphite material as negative electrode material may ensure an excellent initial efficiency and fast-charging performance, while maintaining an excellent self-discharge performance, capacity performance and cycling performance. Specifically, the initial efficiency may be greater than 90%, and the fast-charging time may be less than 30s, even less than 15s; on this basis, the discharging capacity may be greater than 355mAh/g, the number of cycles may be more than 1700 cycles, the duration of storage may be more than 180 days, and the self-discharge voltage may be less than 0.7V.

The inventor's research has discovered that when La and Lc are too small, issues of deterioration in compaction and capacity arise, and when the particle crushing force F is too low, the cycling performance is suboptimal. Only under the specific conditions of La and Lc, and particle crushing force F as defined in the present disclosure can the aforementioned electrochemical performance be balanced effectively.

Compared to Example 1, Comparative Examples 1, 3, and 6-9 exhibit graphite materials with excessively large La and Lc values, and the particle crushing force F is too low. As a result, the discharging capacity of the resulting lithium-ion batteries significantly decreases, the initial efficiency is poor, the fast-charging time is extended, and the number of cycles, the duration of storage, and the self-discharge voltage all noticeably deteriorate.

Compared to Example 1, the differences in Comparative Example 5 lie in the excessively large La and Lc of the graphite material, and the inadequately low particle crushing force F. Although the resulting lithium-ion battery exhibits a higher initial efficiency, a greater number of cycles, a longer duration of storage, and a lower self-discharge voltage, the discharging capacity of the lithium-ion battery is reduced, and the fast charging time is significantly extended. Consequently, Comparative Example 5 fails to achieve both excellent initial efficiency and fast-charging performance.

Compared to Example 1, the differences in Comparative Examples 2 and 7 are as follows. Although the particle crushing force of the graphite material is greater, both La and Lc are excessively large. Consequently, the discharging capacity of the resulting lithium-ion battery significantly decreases, the initial efficiency is poor, the fast-charging time is extended, and the number of cycles, duration of storage, and self-discharge voltage all noticeably deteriorate.

Compared to Example 1, the difference in Comparative Example 4 lies in the fact that, although the La and Lc of the graphite material are comparable, the particle crushing force F is excessively low. While the resulting lithium-ion battery exhibits a relatively shorter fast-charging time, there is a significant deterioration in the discharging capacity, the initial efficiency, the number of cycles, the duration of storage, and the self-discharge voltage. Consequently, Comparative Example 4 is unable to simultaneously achieve both excellent fast-charging time and initial efficiency.

**Claims**

1. A graphite material, satisfying the following conditions:

    a. La≤72nm, Lc≤15nm; wherein La is a lattice constant of a graphite crystal in a 110 plane in the graphite material, and Lc is a lattice constant of the graphite crystal in a 002 plane in the graphite material;
    b. F≥15mN, wherein F is a particle crushing force.

2. The graphite material according to claim 1, satisfying one or more of the following conditions a-d:

    a. La≤60nm;
    b. Lc≤12nm;
    c. 15mN≤F≤25mN;
    d. 0<S≤0.1, wherein S is a particle size distribution symmetry.

3. The graphite material according to claim 1, satisfying one or more of the following conditions a-d:

    a. a Dv50 particle size of the graphite material is 10μm-13μm;
    b. a sphericity of the graphite material is 0.5-1.0;
    c. a carbon content of the graphite material is greater than 99.9%, with a percentage being calculated as a mass percentage of the graphite material;
    d. the graphite material is microcrystalline graphite.

4. A method for preparing the graphite material according to any one of claims 1-3, comprising the following steps:

S1, conducting a first mixing by mixing a graphite precursor and a binder, adding a solvent to conduct a second mixing to obtain a mixture; wherein a temperature of the first mixing is 5°C-20°C below a softening point of the binder;

S2, pressing the mixture to obtain a graphite green body;

S3, laying the graphite green body on a surface layer of graphitization equipment, laying a graphitization insulation material on the graphite green body, conducting a graphitization treatment, the graphite green body obtaining graphitized graphite green body through the graphitization treatment;

S4, conducting a crushing treatment on the graphitized graphite green body to obtain the graphite material.

5. The method for preparing the graphite material according to claim 4, wherein, in step S1, the temperature of the first mixing is 8°C-15°C below the softening point of the binder.

6. The method for preparing the graphite material according to claim 4, wherein step S1 satisfies one or more of the following conditions a-i:

a. in step S1, a sphericity of the graphite precursor is 0.7-1.0;
b. in step S1, the graphite precursor is natural microcrystalline graphite;
c. in step S1, a fixed carbon content of the graphite precursor is 88%-91%, with a percentage being a mass percentage of the graphite precursor;
d. in step S1, a Dv50 particle size of the graphite precursor is $6\mu m$-$8\mu m$;
e. in step S1, a mass ratio of the graphite precursor to the binder is (4-7):1;
f. in step S1, the binder comprises one or more of petroleum pitch, phenolic resin, epoxy resin, and coal tar;
g. in step S1, the softening point of the binder is 100°C-250°C;
h. in step S1, the solvent is selected from one or more of xylene, toluene, and n-hexane;
i. in step S1, a solid content of the mixture is 40%-60%, with a percentage being calculated as a mass percentage of a solid ingredient of the mixture to a total mass of the mixture.

7. The method for preparing the graphite material according to claim 4, wherein step S1 and step S2 satisfy one or more of the following conditions a-d:

a. in step S1, the method of performing the first mixing is stirring;
b. in step S1, the method of performing the second mixing is stirring;
c. in step S1, the method for preparing the graphite precursor comprises the following steps: conducting water washing and flotation on graphite ore, then conducting coarse crushing and a spheroidization treatment to obtain the graphite precursor;
d. in step S2, the pressing is isostatic pressing.

8. The method for preparing the graphite material according to claim 4, wherein step S3 and step S4 satisfy one or more of the following conditions a-f:

a. in step S3, a temperature of the graphitization treatment is greater than 1600°C;
b. in step S3, a time for the graphitization treatment is 18 hours to 40 hours;
c. in step S3, the graphitization insulation material is petroleum coke and/or pitch coke;
d. in step S3, the graphitization equipment is a graphitization furnace;
e. in step S4, the crushing treatment further comprises sieving and magnetic purification;
f. in step S4, the crushing treatment is crushing until a Dv50 particle size of particles is $10\mu m$-$13\mu m$.

9. An electrochemical device, comprising a negative electrode sheet, wherein the negative electrode sheet comprises a negative electrode material layer and a negative electrode current collector, the negative electrode material layer comprising the graphite material according to any one of claims 1-3.

10. An electronic apparatus, comprising the electrochemical device according to claim 9.

EP 4 741 342 A1

Europäisches Patentamt
European Patent Office
Office européen des brevets

**EUROPEAN SEARCH REPORT**

Application Number

EP 25 20 9395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/035266 A1 (CONTEMPORARY AMPEREX TECHNOLOGY CO LTD [CN]) 16 March 2023 (2023-03-16) * examples 1-7 * * tables 1-2 * ----- | 1-10 | INV. C01B32/20 C01B32/205 C01B32/21 C04B35/532 |
| Y | CHO JONG HOON ET AL: "Fabrication of Binder Pitches Allowing for Low-Temperature Formation and High Coking Values and Examination of Mechanical Properties of Artificial Graphite Blocks Made of Binder Pitches", ACS OMEGA, vol. 7, no. 9, 23 February 2022 (2022-02-23), pages 7845-7852, XP093378437, US ISSN: 2470-1343, DOI: 10.1021/acsomega.1c06750 * abstract * * Experimental Method section * ----- | 1-10 | |
| Y | CN 105 271 190 B (DATONG XINCHENG NEW MATERIAL CO LTD) 24 October 2017 (2017-10-24) * examples 1-3 * * claims 1-17 * ----- | 1-10 | TECHNICAL FIELDS SEARCHED (IPC) C01B B32B C04B |
| A | CN 101 654 239 B (UNIV TSINGHUA; CHENZHOU JINGGONG POT LEAD CO ET AL.) 3 August 2011 (2011-08-03) * the whole document * ----- | 1-10 | |

The present search report has been drawn up for all claims

| Place of search | Date of completion of the search | Examiner |
|---|---|---|
| The Hague | 17 March 2026 | Eren, Hamit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 25 20 9395

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2026

| Patent document cited in search report | | Publication date | Patent family member(s) | | Publication date |
|---|---|---|---|---|---|
| WO 2023035266 | A1 | 16-03-2023 | CN | 116711117 A | 05-09-2023 |
| | | | EP | 4174991 A1 | 03-05-2023 |
| | | | JP | 7584541 B2 | 15-11-2024 |
| | | | JP | 2023544934 A | 26-10-2023 |
| | | | KR | 20230039596 A | 21-03-2023 |
| | | | US | 2023128168 A1 | 27-04-2023 |
| | | | WO | 2023035266 A1 | 16-03-2023 |
| CN 105271190 | B | 24-10-2017 | NONE | | |
| CN 101654239 | B | 03-08-2011 | NONE | | |

EPO FORM P0459

For more details about this annex : see Official Journal of the European Patent Office, No. 12/82

**REFERENCES CITED IN THE DESCRIPTION**

**Patent documents cited in the description**

- CN 107555426 A

- CN 109616640 A